# FASCICULE DE BREVET EUROPEEN

(11) **EP 0 630 740 B1**
(45) Date de publication et mention de la délivrance du brevet: **21.01.1998**
(21) Numéro de dépôt: 94108779.3
(22) Date de dépôt: 08.06.1994
(51) Int. Cl.: B29D 30/56, B29D 30/58

(54) **Procédé et dispositif d'assemblage d'une carcasse de pneumatique et d'une bande de roulement annulaire étirée par centrifugation**
Verfahren und Vorrichtung zum Zusammenbau einer Reifenkarkasse und einer durch Zentrifugalkraft gestreckten, ringförmigen Lauffläche
Process and apparatus for assembling a tyre carcass and an annular tread stretched by centrifugation

(30) Priorité: 25.06.1993 FR 9307883
(43) Date de publication de la demande: 28.12.1994
(73) Titulaire: COMPAGNIE GENERALE DES ETABLISSEMENTS MICHELIN - MICHELIN & CIE, 63040 Clermont-Ferrand Cédex (FR)
(72) Inventeur: Garmy, Michel, F-63670 Le Cendre (FR); Ravel, Bernard, F-63830 Nohanent (FR)
(74) Mandataire: Bauvir, Jacques

(56) Documents cités:
- FR-A- 2 271 037
- FR-A- 2 379 372
- US-A- 3 769 121
- DATABASE WPI Section PQ, Week 8517, Derwent Publications Ltd., London, GB; Class P56, AN 85-104220 & SU-A-1 119 817 (SEVAST INSTR. INST.)
- PATENT ABSTRACTS OF JAPAN vol. 6, no. 172 (M-154) (1050) 7 Septembre 1982 & JP-A-57 084 835 (YOKOHAMA GOMU K. K.)

## Description

La présente invention se rapporte à un procédé et à un dispositif d'assemblage d'une bande de roulement annulaire prévulcanisée et d'une carcasse de pneumatique, en vue, soit d'un rechapage de pneumatiques dont la bande de roulement est usée, soit de la fabrication de pneumatiques neufs.

Le rechapage de pneumatiques dont la bande de roulement est usée avec une bande de roulement annulaire prévulcanisée est bien connu. Le brevet US4088521 de Neal décrit une telle bande de roulement annulaire avec des ailes s'adaptant sur la partie supérieure des flancs de la carcasse. Le brevet US4957575 de Cronin divulgue un dispositif d'assemblage par étirement de la bande de roulement annulaire. La bande de roulement annulaire est maintenue au niveau de sa surface radialement intérieure par des barres qui peuvent s'écarter radialement entre elles et ainsi assurer l'extension nécessaire pour l'assemblage puisque de telles bandes de roulement annulaires ont, au repos, un diamètre minimum notablement inférieur au diamètre extérieur maximum de la carcasse.

Un tel dispositif d'assemblage présente cependant plusieurs problèmes. L'étirement moyen de la bande de roulement annulaire n'est pas homogène. D'autre part, un contact est établi entre les barres et la surface radialement intérieure de la bande de roulement annulaire, surface qui doit ensuite être mise en contact avec la surface extérieure de la carcasse et solidement adhérer avec celle-ci après la vulcanisation de la gomme de liaison. Ce contact est susceptible d'entraîner localement des défauts d'adhésion entre la bande de roulement annulaire et la carcasse, ce qui peut avoir des conséquences ultérieures très graves lors du roulage. Enfin, l'opération de retrait de ces barres après une première mise en contact partielle de la bande de roulement annulaire sur la carcasse peut aussi entraîner un désaxage global et local plus ou moins marqué de la bande de roulement annulaire par rapport à la carcasse et ainsi des problèmes d'uniformité en rotation de l'ensemble.

L'invention vise à pallier les difficultés signalées précédemment et notamment à fournir un moyen d'assemblage qui permette de garantir une bonne uniformité du produit final.

On entend par "carcasse" de pneumatique, soit un pneumatique ayant roulé dont les restes de bande de roulement usée ont été retirés par une opération d'usinage, soit un pneumatique neuf auquel il ne manque que la bande de roulement.

On entend par "plan de référence circonférentiel" d'une bande de roulement annulaire ou d'une carcasse de pneumatique, un plan perpendiculaire à l'axe de symétrie de ladite bande de roulement ou de ladite carcasse qui sert de référence pour positionner ladite bande de roulement par rapport à ladite carcasse. On appelle respectivement ces plans P1 et P2.

Ce procédé d'assemblage d'une carcasse de pneumatique et d'une bande de roulement annulaire prévulcanisée est tel que :
- on met en place la bande de roulement annulaire sur la surface radialement intérieure de moyens de support annulaires de la bande de roulement, lesdits moyens de support étant déformables sous l'effet d'une sollicitation radiale dirigée vers l'extérieur ;
- on met en rotation les moyens de support annulaires de la bande de roulement pour étirer par centrifugation la bande de roulement annulaire de sorte que, à l'état étiré, son plus petit diamètre est supérieur au plus grand diamètre de la carcasse de pneumatique ;
- on place la carcasse de pneumatique dans une zone adjacente à la bande de roulement de sorte que leurs plans de référence circonférentiels coïncident ;
- on réduit progressivement l'extension de la bande de roulement jusqu'à son contact avec la carcasse de pneumatique.

Le maintien de la bande de roulement par sa surface radialement extérieure pendant toute la durée de l'assemblage permet de supprimer tout contact avec sa surface radialement intérieure destinée à être collée avec la carcasse. Les problèmes de désaxage liés au retrait des moyens d'étirement disparaissent aussi.

Les moyens de support de la bande de roulement annulaire assurent un positionnement axial et circonférentiel de ladite bande de roulement annulaire pendant toute la durée de l'assemblage.

Selon un mode préféré du procédé d'assemblage selon l'invention, on met en rotation simultanément les moyens de support de la bande de roulement annulaire ainsi que ceux de la carcasse.

La mise en contact de la surface radialement intérieure de la bande de roulement annulaire et du sommet de la carcasse peut être réalisée sous vide.

Un autre aspect du procédé selon l'invention est caractérisé en ce que, après avoir réalisé la mise en contact de la surface radialement intérieure de la bande de roulement annulaire et du sommet de la carcasse, la zone de contact est soumise à une pression statique.

Cette pression d'application statique, sur l'ensemble de la zone de contact entre la bande de roulement annulaire et la carcasse, couplée à la réalisation du contact sous vide permettent d'assurer une surface effective de contact très élevée et une excellente adhésion entre les deux parties.

L'invention a aussi pour objet un dispositif d'assemblage d'une carcasse de pneumatique et d'une bande de roulement annulaire prévulcanisée tel que defini dans la revendication 5.

Selon une autre caractéristique du dispositif d'assemblage de l'invention, la déformabilité des moyens de support de la bande de roulement annulaire est inférieure à celle de ladite bande de roulement annulaire.

Cette caractéristique assure que lors de la mise en rotation de la bande de roulement annulaire sur ses moyens de support, ladite bande de roulement annulaire reste constamment en contact avec lesdits moyens de support ce qui garantit son bon entraînement en rotation et son bon positionnement.

Le procédé et le dispositif d'assemblage selon l'invention assurent ainsi une répartition homogène des tensions dans la bande de roulement annulaire pendant et après l'assemblage et respectent l'intégrité des surfaces avant leur mise en contact. La reproductibilité de l'assemblage est de plus excellente de par la suppression quasi-complète des effets dus aux opérateurs.

Les figures suivantes illustrent le procédé d'assemblage selon l'invention et décrivent un mode de réalisation du dispositif pour sa mise en oeuvre :
- la figure 1 est une vue en coupe verticale d'un dispositif d'assemblage, coupe passant par l'axe de rotation des moyens de support de la bande de roulement et de la carcasse, avant l'assemblage ;
- la figure 2 représente un détail de la figure 1 relatif aux moyens de support de la bande de roulement annulaire, avant la centrifugation, demi-coupe droite, et pendant la centrifugation, demi-coupe gauche ;
- les figures 3 et 4 présentent une coupe de face et de profil de dispositifs de fixation de la bande de roulement annulaire ;
- la figure 5 présente une vue en coupe similaire à la figure 2 des moyens de support de la bande de roulement annulaire après l'assemblage ;
- la figure 6, similaire à la figure 1, représente les moyens d'entraînement du dispositif, accouplés.
- la figure 7 présente une coupe axiale partiellement éclatée d'un assemblage carcasse, gomme de liaison et bande de roulement annulaire.

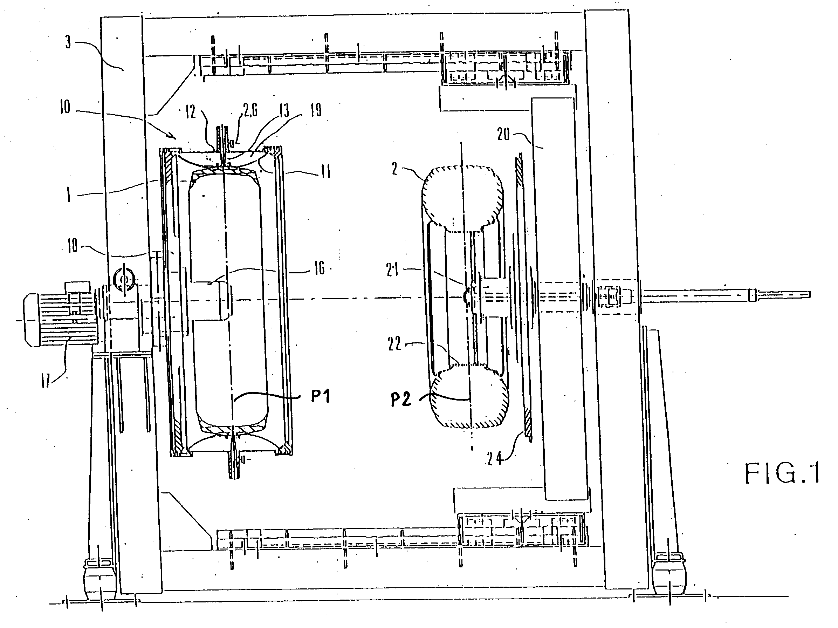

Sur la figure 1, un dispositif d'assemblage d'une bande de roulement annulaire 1 sur une carcasse de pneumatique 2 permet de réaliser l'extension de ladite bande de roulement annulaire 1 nécessaire pour permettre sa mise en place sur la carcasse 2 par centrifugation.

Il comprend des moyens 10 de support de la bande de roulement annulaire 1 qui comportent une membrane déformable 11, par exemple en caoutchouc, de forme sensiblement demi-torique, montée à l'intérieur d'un support cylindrique 12. Cette membrane 11 est de préférence armée de sorte que sa rigidité circonférentielle soit plus faible que sa rigidité transversale. Le diamètre intérieur de la membrane 11 est réglable en mettant en dépression interne la chambre 19 formée entre le support cylindrique 12 et ladite membrane 11. Comme à l'état repos, le diamètre de la membrane 11 est légèrement inférieur à celui des différentes bandes de roulement annulaires qu'il est possible d'assembler avec ce dispositif, cette mise en dépression permet un réglage fin de son diamètre en fonction de la bande de roulement annulaire 1 utilisée de façon à enserrer celle-ci suffisamment pour l'entraîner en rotation avec la membrane 11.

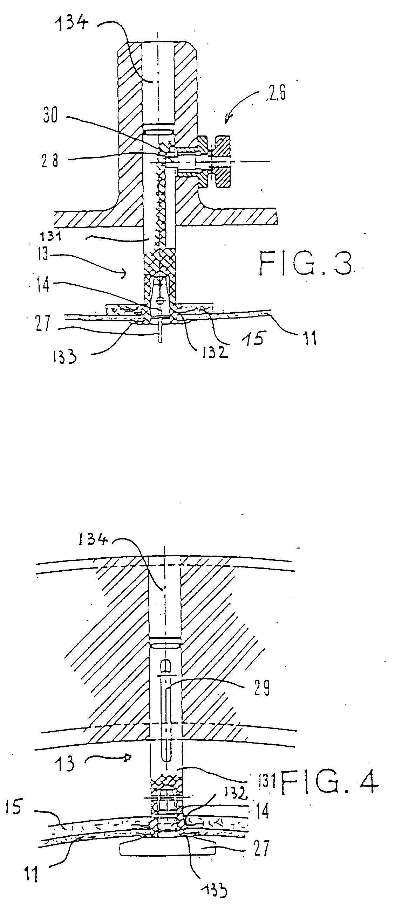

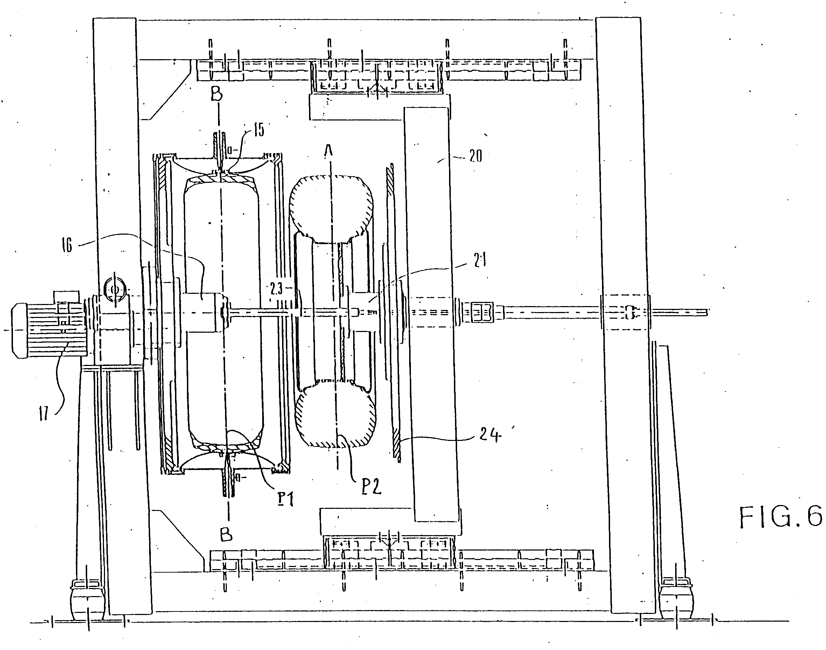

Le plan de symétrie circonférentiel de la membrane 11 est percé de n trous également répartis. La valeur de n est, par exemple, égal à 12, 18 ou 24. Ces trous servent à fixer n éléments de fixation 13 (figures 3 et 4) constitués d'une tige allongée 131 percée d'une rainure 29 et terminée d'un seul côté par une collerette 132 et une base élargie 133. Les bords des trous de la membrane 11 sont pincés de façon étanche entre les collerettes 132 et les bases élargies 133. Les tiges 131 coulissent radialement dans n logements 134 prévus dans le plan de symétrie circonférentiel du support cylindrique 12.

Les plans de symétrie circonférentiels de la membrane 11 et du support cylindrique 12 sont ainsi continûment maintenus en coïncidence quel que soit le diamètre de ladite membrane 11.

A l'extrémité radialement intérieure d'une fraction f des éléments de fixation 13, par exemple un sur deux, est fixé, de façon amovible, un embout 14 dont la forme est adaptée pour s'emboîter dans un creux de la sculpture de la bande de roulement annulaire 1 et ainsi interdire en particulier tout mouvement axial ou circonférentiel de ladite bande de roulement 1 par rapport à la membrane 11. Ces embouts 14 font office de points de liaison entre la bande de roulement annulaire 1 et la membrane 11. Leur fonction est de maintenir le plan de référence circonférentiel P1 de la bande de roulement annulaire 1 en coïncidence avec le plan de symétrie circonférentiel de la membrane 11. Ces embouts 14, s'adaptant dans le dessin des sculptures, n'écartent pas la bande de roulement annulaire 1 de la surface radialement intérieure de la membrane 11, mais ils peuvent se déplacer radialement avec elle lors de son extension circonférentielle.

Aux figures 3 et 4 on voit une coupe de face et de profil d'un exemple de tels embouts 14, dans le cas où la forme s'adaptant à la sculpture de la bande de roulement annulaire 1 est une simple lamelle 27.

L'amplitude du déplacement radial des éléments de fixation 13 en fonction du diamètre des bandes de roulement annulaire 1 utilisées est fixée par le dispositif 26. Dans le cas de deux diamètres de bande de roulement annulaire 1, ce dispositif 26 comporte un index 28 à deux positions axiales. Cet index 28 est placé dans une rainure 29 de l'élément de fixation 13 et ainsi limite son déplacement radial dans deux fourchettes de longueurs définies par la longueur de ladite rainure 29 et son décrochement 30 adapté aux deux positions axiales de l'index 28.

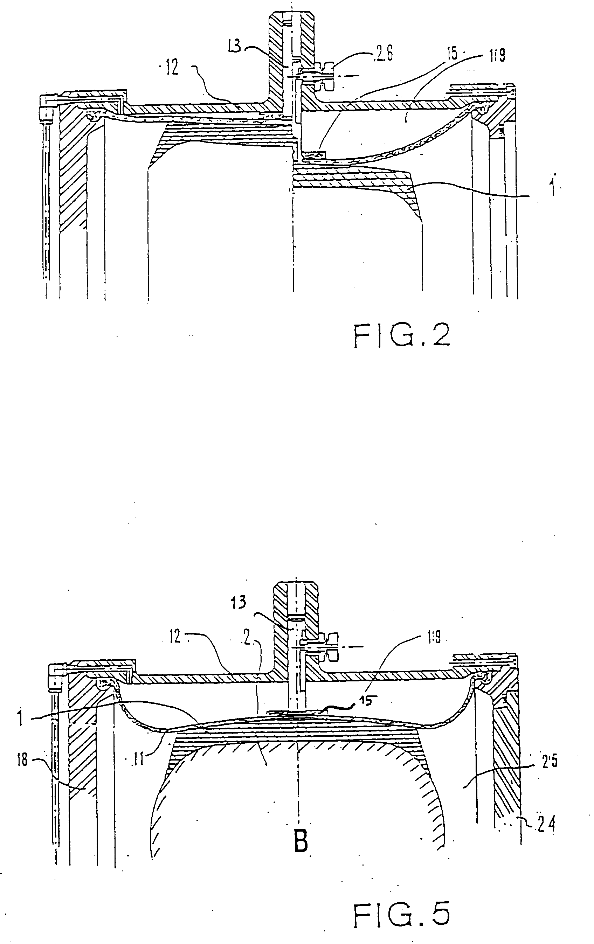

Pendant toute la durée de la centrifugation, il est nécessaire que le contact soit maintenu entre la surface radialement extérieure de la bande de roulement annulaire 1 et la surface radialement intérieure des moyens de support 10 afin de garantir l'entraînement de ladite bande de roulement annulaire 1 et son bon positionnement par rapport au plan de symétrie circonférentiel du support cylindrique 12. L'extension propre circonférentielle de la membrane 11, sous l'action des forces centrifuges, ne doit donc pas être supérieure à celle de la bande de roulement annulaire 1, ou, autrement dit, la "déformabilité circonférentielle" de la membrane 11 sous l'action des forces centrifuges doit être inférieure à celle de la bande de roulement annulaire 1. A cet effet, un bracelet 15 en caoutchouc (fig. 2, 3, 4), de forme sensiblement cylindrique, est placé contre la surface radialement extérieure de la membrane 11 et symétriquement par rapport au plan de symétrie circonférentiel de ladite membrane. Ce bracelet 15, dont le diamètre est inférieur à celui de la membrane à l'état repos, diminue la déformabilité de la partie centrale de la membrane 11.

Le support cylindrique 12 est monté, par l'intermédiaire d'un flasque 18, sur un moyeu 16 motorisé par le moteur 17, lui-même supporté par le bâti 3 (fig. 1).

Le bâti 3 reçoit un chariot 20 qui supporte un deuxième moyeu 21 sur lequel peut être montée une roue 22 supportant la carcasse 2 gonflée. La course du chariot 20 est telle que les deux plans de référence circonférentiels P2 et P1 de la carcasse 2 et de la bande de roulement 1 peuvent être amenés en coïncidence.

Ces deux moyeux 16 et 21 ont le même axe de rotation et sont reliables par un arbre polygonal télescopique 23 permettant d'entraîner le moyeu 21 par le moteur 17 et ainsi garantissant, à tout instant, une même vitesse angulaire pour les deux moyeux.

Le moyeu 21 supporte aussi un flasque 24 dont la géométrie est adaptée à celle du support cylindrique 12. Quand les plans de référence circonférentiels P2 et P1 de la carcasse 2 et de la bande de roulement annulaire 1 sont mis en coïncidence par translation du chariot 20 (fig. 5), ce flasque 24 s'applique contre le côté du support cylindrique 12 et ferme une chambre étanche 25 constituée des flasques 18 et 24, du support cylindrique 12 et de la membrane 11. Dans cette chambre 25 se trouve l'ensemble carcasse 2 et bande de roulement annulaire 1. Le vide peut être réalisé dans cette chambre étanche 25 au moyen d'une pompe à vide et de joints tournants non représentés.

Le procédé d'assemblage selon l'invention est maintenant décrit dans le cas d'un rechapage de la bande de roulement usée d'un pneumatique, en se référant au dispositif précédent.

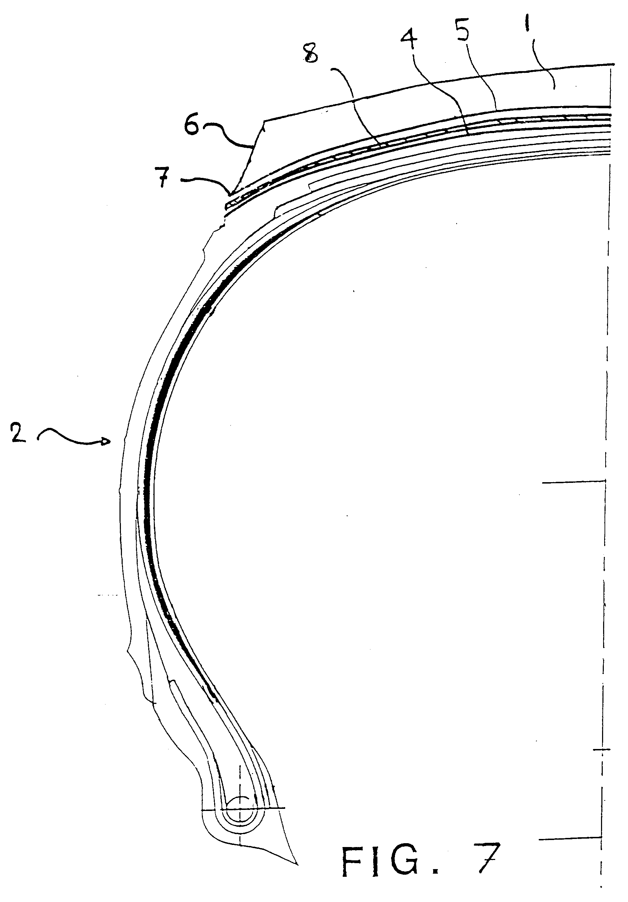

La figure 7 présente une coupe axiale partiellement éclatée d'un assemblage carcasse 2, gomme de liaison 8 et bande de roulement annulaire prévulcanisée 1.

La bande de roulement annulaire 1 a un diamètre intérieur dans son plan circonférentiel P1 légèrement inférieur au diamètre extérieur de la carcasse 2 préparée pour l'assemblage dans son plan circonférentiel P2 de telle sorte qu'après l'assemblage, la bande de roulement 1 soit dans un état de légère extension et frette ladite carcasse 2.

Après avoir préparé de façon connue les surfaces radialement extérieure 4 de la carcasse 2 et radialement intérieure 5 de la bande de roulement annulaire 1 et mis en place, si nécessaire, une gomme de liaison 8 sur l'une desdites surfaces, on met en place et on gonfle la carcasse 2 sur la roue 22 et le moyeu 21, puis on installe la bande de roulement annulaire 1 sur la surface radialement intérieure de la membrane 11 en vérifiant le positionnement correct des dispositifs 14 de fixation et de centrage de la bande de roulement annulaire 1 sur la membrane 11. Le diamètre de la membrane 11 est réglé de telle sorte qu'il soit légèrement inférieur à celui de la bande de roulement annulaire 1 pour faciliter le montage manuel.

Le chariot 20 est alors déplacé jusqu'à une position intermédiaire A (figure 6) et les deux moyeux 16 et 21 sont accouplés par l'intermédiaire de l'arbre polygonal télescopique 23.

On met en rotation l'ensemble au moyen du moteur 17.

La membrane 11 renforcée dans sa partie centrale par le bracelet 15, en se dilatant, reste constamment en contact avec la bande de roulement annulaire dans sa partie centrale tout en laissant libres de se déformer davantage les bords de ladite bande de roulement annulaire 1.

Lorsque l'accélération centrifuge atteint environ 800 m/s², soit une vitesse de rotation de l'ordre de 350 tr/mn, dans le cas d'un pneumatique poids lourd de diamètre 1,20 m, l'expansion radiale de la bande de roulement annulaire 1 est suffisante, au centre et sur ses bords pour permettre le passage de la carcasse 2.

Le chariot 20 est alors déplacé jusqu'à la position B (fig. 5). Dans cette position, les plans de référence circonférentiels P1 et P2 de la bande de roulement annulaire 1 et de la carcasse 2 coïncident et le flasque 24 s'applique contre le côté du support cylindrique 12 ce qui rend étanche la chambre 25.

Cette chambre 25 et l'intérieur 19 de la membrane 11 sont alors mis en dépression jusqu'à une pression absolue de l'ordre de 50 à 300 mbars.

Une diminution progressive de la vitesse de rotation couplée à la mise à la pression atmosphérique de la chambre 19 à l'intérieur de la membrane 11 vont provoquer la contraction de la bande de roulement annulaire 1 et sa progressive mise en contact avec la surface radialement extérieure de la carcasse 2.

Cette mise en contact s'effectue circonférentiellement et progressivement, d'abord au centre puis sur les bords.

Lorsque toute la surface radialement intérieure de la bande de roulement annulaire 1 a été mise en contact avec la surface radialement extérieure de la carcasse 2, la pression de la chambre 19 est augmentée jusqu'à une valeur de l'ordre de 2 à 3 bars absolus pour appliquer sur toute la zone qui vient d'être mise en contact une pression sensiblement normale. Cette pression d'application, maintenue pendant quelques secondes à quelques dizaines de secondes, et la mise en contact sous vide ont pour but d'assurer un contact intime entre les deux surfaces en contact.

L'application de cette pression normale peut intervenir avant l'arrêt complet de la rotation de l'ensemble, ou après.

Si nécessaire, la mise en contact entre la bande de roulement annulaire 1 et la carcasse 2 peut être complétée par un rouletage ou un pressage statique des bords 6 de ladite bande de roulement 1 et notamment de leurs pointes 7.

La chambre 25 est enfin mise à l'air libre et la chambre 19 entre la membrane 11 et le support cylindrique 12 en dépression. La membrane 11 s'écarte de la bande de roulement annulaire 1. Le chariot est déplacé jusqu'à sa position d'origine.

L'ensemble bande de roulement annulaire 1 et carcasse 2 est alors transféré vers les moyens de vulcanisation après la mise en place d'une enveloppe de vulcanisation, si nécessaire.

La qualité et la reproductibilité de l'assemblage obtenu avec le procédé et le dispositif selon l'invention sont excellents. A titre d'exemple, les écarts de centrage obtenus entre la bande de roulement annulaire 1 et le plan circonférentiel P2 de la carcasse 2 sont aisément inférieurs à 1 mm sur toute la circonférence du pneumatique. L'uniformité en rotation des pneumatiques obtenus est ainsi, elle aussi, excellente. Enfin, ce mode d'assemblage permet de régler la majeure partie des difficultés liées aux vulcanisations réalisées sans utiliser d'enveloppe de vulcanisation.

Le frettage de la bande de roulement annulaire 1 sur la carcasse 2 après l'assemblage, ainsi que l'adéquation entre les profils des surfaces de ladite bande de roulement annulaire 1 et de ladite carcasse 2, qui viennent d'être mises en contact, sont tels que l'emploi de dissolutions, classiquement destinées à augmenter le collant à cru des surfaces devant être mises en contact, peut n'être plus nécessaire.

Le procédé est aussi applicable en utilisant une bande de roulement plate classique, il suffit de la mettre en anneau avec une soudure, même non vulcanisée, avant sa mise en place sur les moyens de support 10.

## Revendications

1. Procédé d'assemblage d'une carcasse de pneumatique (2) et d'une bande de roulement annulaire (1) prévulcanisée selon lequel :
- on met en place la bande de roulement annulaire (1) sur la surface radialement intérieure de moyens de support annulaires (10) de la bande de roulement (1), lesdits moyens de support (10) étant déformables sous l'effet d'une sollicitation radiale dirigée vers l'extérieur ;
- on met en rotation les moyens de support annulaires (10) de la bande de roulement (1) pour étirer par centrifugation la bande de roulement annulaire (1) de sorte que, à l'état étiré, son plus petit diamètre est supérieur au plus grand diamètre de la carcasse de pneumatique (2) ;
- on place la carcasse de pneumatique (2) dans une zone adjacente à la bande de roulement annulaire (1) de sorte que leurs plans de référence circonférentiels coïncident ;
- on réduit progressivement l'extension de la bande de roulement annulaire (1) jusqu'à son contact avec la carcasse de pneumatique (2).

2. Procédé d'assemblage selon la revendication 1 caractérisé en ce que on met en rotation simultanément les moyens de support (10) de la bande de roulement annulaire (1) et les moyens de support (21, 22) de la carcasse (2).

3. Procédé d'assemblage selon l'une des revendications 1 et 2 caractérisé en ce que la mise en contact de la surface radialement intérieure de la bande de roulement annulaire (1) et du sommet de la carcasse (2) est réalisée sous vide.

4. Procédé d'assemblage selon l'une des revendications 1 à 3 caractérisé en ce que, après avoir réalisé la mise en contact de la surface radialement intérieure de la bande de roulement annulaire (1) et du sommet de la carcasse de pneumatique (2), la zone de contact est soumise à une pression statique.

5. Dispositif d'assemblage d'une carcasse de pneumatique (2) et d'une bande de roulement annulaire (1) prévulcanisée, comportant :
- un bâti (3) ;
- des moyens de support (10, 22) de la bande de roulement annulaire (1) et de la carcasse de pneumatique (2), lesdits moyens de support (10, 22) étant montés rotatifs par rapport au bâti (3) et étant déformables sous l'effet d'une sollicitation radiale dirigée vers l'extérieur ;
- des moyens de mise en rotation (17) desdits moyens de supports (10, 22) ; et
- des moyens de déplacement relatif (20) desdits moyens de support (10, 22) pour faire coïncider les plans de référence circonférentiels de la bande de roulement annulaire (1) et de la carcasse de pneumatique (2).

6. Dispositif d'assemblage selon la revendication 5, caractérisé en ce que les moyens de support (10) de la bande de roulement annulaire (1) comportent une membrane (11) de forme demi-torique montée à l'intérieur d'un support cylindrique (12), le diamètre intérieur de ladite membrane (11) étant réglable.

7. Dispositif d'assemblage selon la revendication 6, caractérisé en ce que le diamètre intérieur de la membrane (11) est réglable en modifiant la pression à l'intérieur de la chambre (19) formée par ladite membrane (11) et le support cylindrique (12).

8. Dispositif d'assemblage selon l'une des revendications 6 et 7, caractérisé en ce que le positionnement axial et circonférentiel du plan de symétrie de la membrane (11) est assuré par n éléments de fixation (13), répartis dans un même plan circonférentiel du support cylindrique (12), dont une extrémité est fixée audit support cylindrique (12), et l'autre extrémité, coulissant radialement, est fixée à la membrane (11) dans son plan de symétrie.

9. Dispositif d'assemblage selon la revendication 8, caractérisé en ce que une fraction f des n éléments de fixation (13) comporte, du côté de son extrémité fixée à la membrane (11), un dispositif amovible (14) de forme adaptée à la sculpture de la bande de roulement annulaire (1) qui assure le positionnement axial et circonférentiel de ladite bande de roulement (1) pendant toute la durée de l'assemblage.

10. Dispositif d'assemblage selon l'une des revendications 6 à 9, caractérisé en ce que, par augmentation de la pression dans la chambre (19) entre la membrane (11) et le support cylindrique (12), la zone en contact entre la bande de roulement annulaire (1) et la carcasse de pneumatique (2) est soumise à une compression statique.

11. Pneumatique obtenu par l'assemblage d'une bande de roulement annulaire prévulcanisée (1) et d'une carcasse (2) en mettant en oeuvre le procédé de l'une des revendications 1 à 4.

## Claims

1. Process for assembling a tyre casing (2) and a prevulcanised annular tread (1), according to which:
- the annular tread (1) is placed on the radially inner surface of annular support means (10) for the tread (1), said support means (10) being deformable under the effect of a radial stress directed towards the exterior,
- the annular support means (10) for the tread (1) are caused to rotate to extend the annular tread (1) by centrifugation so that, in the extended state, its smallest diameter is greater than the largest diameter of the tyre casing (2),
- the tyre casing (2) is placed in an area adjacent to the annular tread (1) so that their circumferential planes of reference coincide,
- the extension of the annular tread (1) is reduced progressively until it makes contact with the tyre casing (2).

2. Assembly process according to claim 1, characterised in that the support means (10) for the annular tread (1) and the support means (21, 22) for the casing (2) are caused to rotate simultaneously.

3. Assembly process according to one of claims 1 and 2, characterised in that the contact of the radially inner surface of the annular tread (1) and the crown of the casing (2) is established in a vacuum.

4. Assembly process according to one of claims 1 to 3, characterised in that, after having established contact of the radially inner surface of the annular tread (1) and the crown of the tyre casing (2), the zone of contact is subjected to a static pressure.

5. Assembly device for a tyre casing (2) and a prevulcanised annular tread (1), comprising:
- a frame (3);
- support means (10, 22) for the annular tread (1) and the tyre casing (2), said support means (10, 22) being rotatably mounted relative to the support (3) and being deformable under the action of a radial stress directed outwards;
- means (17) for causing said support means (10, 22) to rotate; and
- means of relative displacement (20) of said support means (10, 22) to make the circumferential planes of reference of the annular tread (1) and of the tyre casing (2) coincide.

6. Assembly device according to claim 5, characterised in that the support means (10) for the annular tread (1) includes a membrane (11) of semi-toric shape mounted within a cylindrical support (12), the inside diameter of said membrane (11) being adjustable.

7. Assembly device according to claim 6, characterised in that the internal diameter of the membrane (11) is adjustable by modifying the pressure within the chamber (19) formed by said membrane (11) and the cylindrical support (12).

8. Assembly device according to one of claims 6 and 7, characterised in that the axial and circumferential positioning of the plane of symmetry of the membrane (11) is effected by n attachment elements (13), distributed in the same circumferential plane of the cylindrical support (12), of which one end is attached to said cylindrical support (12), and the other end, sliding radially, is attached to the membrane (11) in its plane of symmetry.

9. Assembly device according to claim 8, characterized in that a fraction f of the n attachment elements (13) have, on the side of its end attached to the membrane (11), a removable device (14) of a shape adapted to the tread pattern of the annular tread (1) which effects the axial and circumferential positioning of said tread (1) during the entire assembly operation.

10. Assembly device according to one of claims 6 to 9, characterised in that, by increasing the pressure in the chamber (19) between the membrane (11) and the cylindrical support (12), the zone in contact between the annular tread (1) and the tyre casing (2) is subjected to static compression.

11. Tyre obtained by the assembly of a prevulcanised annular tread (1) and a casing (2) by implementing the process of one of claims 1 to 4.

## Patentansprüche

1. Verfahren zum Zusammenbau einer Reifenkarkasse (2) und einer kreisringförmigen, vorvulkanisierten Lauffläche (1), wonach:
- man die kreisringförmige Lauffläche (1) auf der radial inneren Oberfläche von ringförmigen Tragemitteln (10) für die Lauffläche (1) aufsetzt, wobei die genannten Tragemittel (10) unter Wirkung einer radial nach außen gerichteten Belastung verformbar sind;
- man die kreisringförmigen Tragemittel (10) für die Lauffläche (1) in Drehung versetzt, um die kreisringförmige Lauffläche (1) derart durch Fliehkraft zu dehnen, daß im gedehnten Zustand ihr kleinster Durchmesser größer ist als der größte Durchmesser der Reifenkarkasse (2);
- man die Reifenkarkasse (2) in eine Zone einsetzt, die der kreisringförmigen Lauffläche (1) benachbart ist, und zwar derart, daß ihre Umfangsbezugsebenen zusammenfallen; und
- man allmählich die Dehnung der kreisringförmigen Lauffläche (1) bis zu ihrer Berührung mit der Reifenkarkasse (2) verringert.

2. Verfahren zum Zusammenbau nach Anspruch 1, dadurch gekennzeichnet, daß man die Tragemittel (10) der kreisringförmigen Lauffläche (1) und die Tragemittel (21, 22) der Karkasse (2) gleichzeitig in Drehung versetzt.

3. Verfahren zum Zusammenbau nach einem der Ansprüche 1 und 2, dadurch gekennzeichnet, daß die Herstellung der Berührung der radial innen liegenden Oberfläche der kreisringförmigen Lauffläche (1) und des Scheitels der Karkasse (2) im Vakuum durchgeführt wird.

4. Verfahren zum Zusammenbau nach einem der Ansprüche 1 bis 3, dadurch gekennzeichnet, daß nach der Herstellung der Berührung der radial innen liegenden Oberfläche der kreisringförmigen Lauffläche (1) und des Scheitels der Reifenkarkasse (2) die Berührungszone einem statischen Druck unterzogen wird.

5. Vorrichtung zum Zusammenbau einer Reifenkarkasse (2) mit einer kreisringförmigen, vorvulkanisierten Lauffläche (1) mit:
- einem Rahmen (3);
- Tragemitteln (10, 22) für die kreisringförmige Lauffläche (1) und die Reifenkarkasse (2), wobei die genannten Tragemittel (10, 22) in Bezug auf den Rahmen (3) drehbar angebracht sind und unter Wirkung einer radialen, nach außen gerichteten Belastung verformbar sind;
- Mitteln (17), um die genannten Tragemittel (10, 22) in Drehung zu versetzen; und
- Mitteln (20) zur relativen Verlagerung der genannten Tragemittel (10, 22), um die Umfangsbezugsebenen der kreisringförmigen Lauffläche (1) und der Reifenkarkasse (2) zur Übereinstimmung zu bringen.

6. Vorrichtung zum Zusammenbau nach Anspruch 5, dadurch gekennzeichnet, daß die Tragemittel (10) der kreisringförmigen Lauffläche (1) eine Membran (11) mit halb-torusförmiger Gestalt aufweisen, die im Inneren eines zylindrischen Trägers (12) angebracht ist, wobei der Innendurchmesser der genannten Membran (11) einstellbar ist.

7. Vorrichtung zum Zusammenbau nach Anspruch 6, dadurch gekennzeichnet, daß der Innendurchmesser der Membran (11) dadurch einstellbar ist, daß man den Druck im Inneren der Kammer (19) modifiziert, die von der genannten Membran (11) und dem zylindrischen Träger (12) gebildet ist.

8. Vorrichtung zum Zusammenbau nach einem der Ansprüche 6 und 7, dadurch gekennzeichnet, daß die Axial- und Umfangspositionierung der Symmetrieebene der Membran (11) durch n Befestigungselemente (13) sichergestellt ist, die in ein und derselben Umfangsebene des zylindrischen Trägers (12) verteilt sind, von denen das eine Ende am genannten zylindrischen Träger (12) und das andere Ende radial verschieblich an der Membran (11) in ihrer Symmetrieebene befestigt ist.

9. Vorrichtung zum Zusammenbau nach Anspruch 8, dadurch gekennzeichnet, daß ein Bruchteil f der n Befestigungselemente (13) auf der Seite ihres an der Membran (11) befestigten Endes eine abnehmbare Vorrichtung (14) in einer Form aufweist, die an das Profil der kreisringförmigen Lauffläche (1) angepaßt ist, das die Axial- und Umfangspositionierung der genannten Lauffläche (1) während der gesamten Dauer des Zusammenbaus sicherstellt.

10. Vorrichtung zum Zusammenbau nach einem der Ansprüche 6 bis 9, dadurch gekennzeichnet, daß durch Erhöhung des Drucks in der Kammer (19) zwischen der Membran (11) und dem zylindrischen Träger (12) die Berührungszone zwischen der kreisringförmigen Lauffläche (1) und der Reifenkarkasse (2) einem statischen Druck unterzogen wird.

11. Reifen, der durch Zusammenbau einer kreisringförmigen, vorvulkanisierten Lauffläche (1) und einer Karkasse (2) durch Ausführen des Verfahrens nach einem der Ansprüche 1 bis 4 erhalten wurde.
